# EUROPEAN PATENT APPLICATION

(11) **EP 4 572 344 A1**
(43) Date of publication of application: **18.06.2025**
(21) Application number: 23852407.8
(22) Date of filing: 28.07.2023
(51) Int. Cl.: H04W 4/02, H04W 4/44, H04W 16/26

(54) **MARINE SMART POLE TO COMMUNICATE WITH SHIPS, MARITIME COMMUNICATION CONNECTING DEVICE, AND MARITIME COMMUNICATION CONNECTING SYSTEM**

(30) Priority: 10.08.2022 JP 2022128241
(71) Applicant: Yamaha Hatsudoki Kabushiki Kaisha, Iwata-shi, Shizuoka 438-8501 (JP)
(72) Inventor: KADOBAYASHI Yoshiyuki, Iwata-shi, Shizuoka 438-8501 (JP)
(74) Representative: Grünecker Patent- und Rechtsanwälte PartG mbB
(86) International application number: PCT/JP2023/027778
(87) International publication number: WO 2024/034434

(57) **Abstract**

An occupant of a marine vessel enjoys a service that is premised on the presence of precise position information of the marine vessel.

A marine vessel smart pole 10 has a communication function of communicating with a marine vessel 22 and a communication object other than the marine vessel 22, and a position information providing function of providing a position of the marine vessel smart pole 10 to the marine vessel 22 or a server 23 of a port facility 24.

## Description

### Technical Field

The present invention relates to a marine vessel smart pole for communicating with a marine vessel, a marine vessel communication connection device, and a marine vessel communication connection system.

### Background Art

In recent years, a relatively small marine vessel such as a planing boat is equipped with a data communication module (DCM) which is a module for performing wireless communication (see, for example, Patent Literature 1). The DCM connects a navigating marine vessel to an information communication network such as the Internet by wireless communication, and an occupant of the marine vessel can enjoy various services via the information communication network.

By the way, there are not many targets and indicators on the sea and on the lake unlike on land, and thus, it is necessary to use a device mounted on the marine vessel in order to know a current position of the marine vessel on the marine vessel. However, the DCM does not provide position information. Therefore, usually, the marine vessel acquires the current position of the marine vessel using a global positioning system (GPS).

### Citation List

### Patent Literature

Patent Literature 1: Japanese Patent Application No. 2022-007725

### Summary of Invention

### Technical Problem

However, the position information obtained by the GPS includes errors in units of several meters, and thus, it is difficult to acquire a precise current position of the marine vessel, and the occupant of the marine vessel cannot receive a service that is premised on the presence of the precise position information of the marine vessel. Therefore, there is still room for improvement from the viewpoint of allowing the occupant of the marine vessel to enjoy the service.

An object of the present invention is to enable an occupant of a marine vessel to enjoy a service that is premised on the presence of precise position information of the marine vessel.

### Solution to Problem

A marine vessel smart pole according to an aspect of the present invention has: a communication function of communicating with a marine vessel and an object other than the marine vessel; and a position information providing function of providing a position of the marine vessel smart pole to at least one of the marine vessel and the object other than the marine vessel.

According to this configuration, since the marine vessel smart pole provides the marine vessel with the position of the marine vessel smart pole, a precise current position of the marine vessel can be acquired without using a GPS from the provided position of the marine vessel smart pole and a relative positional relationship between the positions of the marine vessel smart pole and the marine vessel. As a result, an occupant of the marine vessel can enjoy a service that is premised on the presence of precise position information of the marine vessel.

### Advantageous Effects of Invention

According to the present invention, the occupant of the marine vessel can enjoy the service that is premised on the presence of the precise position information of the marine vessel.

### Brief Description of Drawings

FIG. 1 is a perspective view of a marine vessel smart pole according to an embodiment of the present invention.
FIG. 2 is a block diagram indicating each of functions performed by a functional portion of the marine vessel smart pole.
FIG. 3 is a view indicating communication using the marine vessel smart pole.
FIG. 4 is a view indicating a case where a plurality of the marine vessel smart poles are arranged in a port.
FIG. 5 is a plan view indicating automated docking of a marine vessel using each of the marine vessel smart poles.
FIG. 6 is a view indicating use of service providing facilities using the marine vessel smart poles.
FIG. 7 is a view indicating a case where the marine vessel smart poles are arranged in a predetermined area outside a port or the like.
FIG. 8 is a perspective view of a connected device according to a variation of the embodiment of the present invention.
FIG. 9A is a view showing an application example of the connected device of FIG. 8.
FIG. 9B is a view showing an application example of the connected device of FIG. 8.
FIG. 10 is a view showing an application example of the connected device of FIG. 8.

### Description of Embodiments

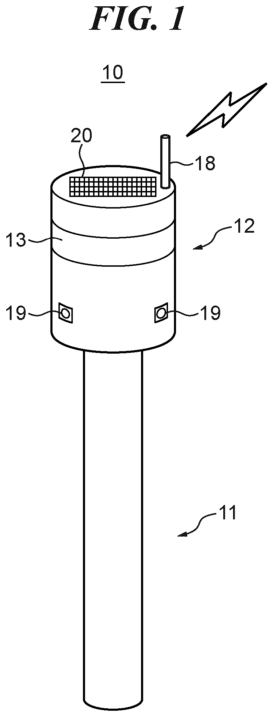

An embodiment of the present invention will be described below with reference to the drawings. FIG. 1 is a perspective view of a marine vessel smart pole 10 according to the embodiment of the present invention. As shown in FIG. 1, the marine vessel smart pole 10 includes a rod-like pile portion 11 and a functional portion 12 attached to the pile portion 11. The marine vessel smart pole 10 is arranged on water or on land near the waterfront.

The marine vessel smart pole 10 is different from a conventional mooring pile in terms of performing each of functions to be described later. When the marine vessel smart pole 10 is arranged on water, the marine vessel smart pole 10 can be used as the mooring pile, and a marine vessel or a pier having a floating structure can be moored to the marine vessel smart pole 10. In addition, since the functional portion 12 of the marine vessel smart pole 10 performs a communication function to be described later, when the marine vessel smart pole 10 is arranged on water, the functional portion 12 is attached to the pile portion 11 such that the functional portion 12 is located above the water surface. It should be noted that the marine vessel smart pole 10 only needs to be capable of mooring the marine vessel or the like and performing each of the functions to be described later, and a form thereof is not limited to the form shown in FIG. 1, and may take any form such as a form in which the pile portion and the functional portion are integrated.

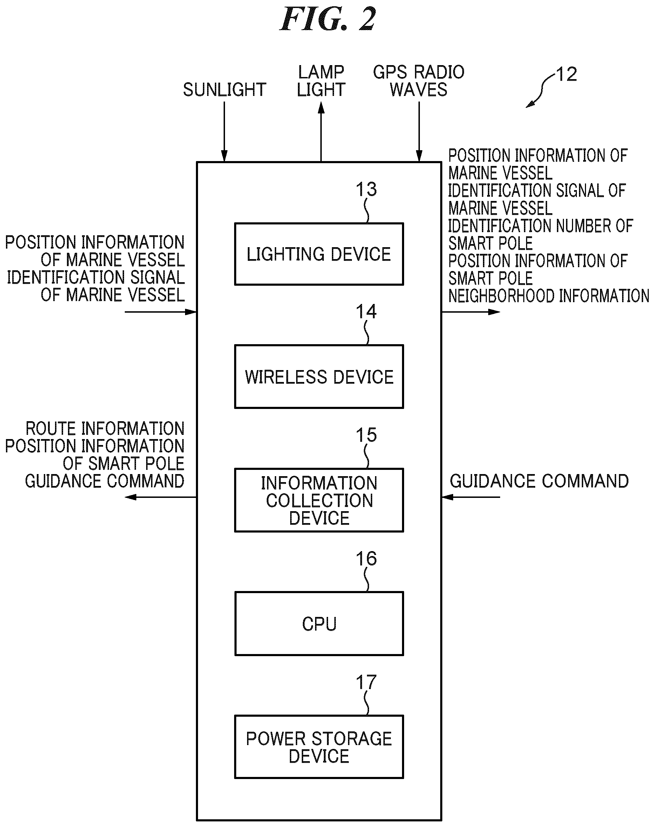

FIG. 2 is a block diagram indicating each of the functions exhibited by the functional portion 12 of the marine vessel smart pole 10. In FIG. 2, the functional portion 12 includes a lighting device 13, a wireless device 14, an information collection device 15, a CPU 16, and a power storage device 17.

The lighting device 13 has an indicator function of notifying the navigating marine vessel of a location of the marine vessel smart pole 10 by emitting lamplight as a landmark. The lighting device 13 includes, for example, an LED lamp or an incandescent lamp, but its form is not limited as long as it can emit lamplight. In addition, the lighting device 13 may also serve as a signal indication device, and in this case, the lighting device 13 may indicate a navigation control signal of a route or a warning signal indicating the presence of a reef or a navigation obstacle.

The wireless device 14 includes an antenna 18 and has a communication function of performing wireless communication with at least one of a marine vessel and a communication object other than the marine vessel, for example, an information communication network such as the Internet, an information processing device such as a server of a port facility, and another marine vessel smart pole. The wireless communication performed by the wireless device 14 corresponds to relatively long-range communication using a mobile phone line or short-range wireless communication such as Wi-Fi (registered trademark) or Bluetooth (registered trademark).

The wireless device 14 of the functional portion 12 of the marine vessel smart pole 10 receives position information and an identification signal of the marine vessel from the marine vessel, and transmits route information, position information of the marine vessel smart pole 10, and a guidance command to be described later to the marine vessel. In addition, the wireless device 14 receives the guidance command from the communication object other than the marine vessel, and transmits the received position information and identification signal of the marine vessel, an identification number of the marine vessel smart pole 10, the position information of the marine vessel smart pole 10, and neighborhood information to be described later to the communication object other than the marine vessel. The guidance command here is a command for guiding the marine vessel toward the marine vessel smart pole 10, and the marine vessel that has received the guidance command moves toward the marine vessel smart pole 10 that has transmitted the guidance command. It should be noted that details of the guidance of the marine vessel will be described later.

The wireless device 14 exerts a position information providing function by transmitting the position information of the marine vessel smart pole 10 to the marine vessel or the communication object other than the marine vessel. The position information transmitted at this time is position information acquired using an electro-optical distance measuring instrument or the like when the marine vessel smart pole 10 is installed and stored in a memory or the like. Therefore, the position information provided by the position information providing function has higher accuracy than position information acquired by the GPS. It should be noted that the position information is stored in a memory or the like of the marine vessel smart pole 10.

The information collection device 15 is a device configured to grasp information regarding a neighborhood situation of the marine vessel smart pole 10 (hereinafter, referred to as "neighborhood information"), and includes, for example, a plurality of monitoring cameras 19 arranged in the marine vessel smart pole 10. The information collection device 15 acquires a peripheral image obtained by each of the monitoring cameras 19 directly as the neighborhood information, or acquires information, obtained by image analysis of the peripheral image, as the neighborhood information. The information obtained by the image analysis of the peripheral image is, for example, information regarding whether or not the marine vessel is moored on the marine vessel smart pole 10 or information regarding whether or not the marine vessel has anchored near the marine vessel smart pole 10. In addition, the information obtained by the image analysis of the peripheral image may be the number of marine vessels anchored near the marine vessel smart pole 10 or the number of marine vessels moored in a pier 26 (described later) corresponding to the marine vessel smart pole 10. These pieces of neighborhood information are transmitted from the information collection device 15 to the wireless device 14, and as described above, the wireless device 14 transmits the neighborhood information to the communication object other than the marine vessel, whereby the wireless device 14 exhibits a neighborhood information providing function. The neighborhood information may be transmitted to the marine vessel by the wireless device 14.

In addition, the information collection device 15 may receive a GPS radio wave and correct the position information of the marine vessel smart pole 10 based on the received GPS radio wave when the marine vessel smart pole 10 has moved due to an external factor such as a tidal current or the like. It should be noted that the position information of the marine vessel smart pole 10 can be corrected with higher accuracy in a case where the information collection device 15 receives not the GPS radio wave but a radio wave from the Quasi-Zenith Satellite System.

The information collection device 15 acquires the neighborhood situation by the respective monitoring cameras 19, but may acquire the neighborhood situation by using radio detection and ranging (RADAR) or light detection and ranging (LIDAR) instead of the monitoring cameras 19. Since RADAR and LIDAR are hardly affected by the surrounding environment and the weather, the neighborhood situation can be acquired more stably.

The power storage device 17 has a power storage function of storing electricity generated by a solar cell panel 20 included in the functional portion 12. The power storage device 17 supplies the stored electricity to each component of the functional portion 12. As a result, the functional portion 12 can operate even if electricity is not supplied from the outside. It should be noted that power generation in the functional portion 12 is not limited to solar power generation using the solar cell panel 20, and may be tidal power generation using tides. In this case, for example, relative movement between the marine vessel smart pole 10 and the pier 26 due to tides is used as an electromotive force.

The CPU 16 controls the operation of each component of the functional portion 12 in accordance with a predetermined program stored in a memory or the like or a command from the outside.

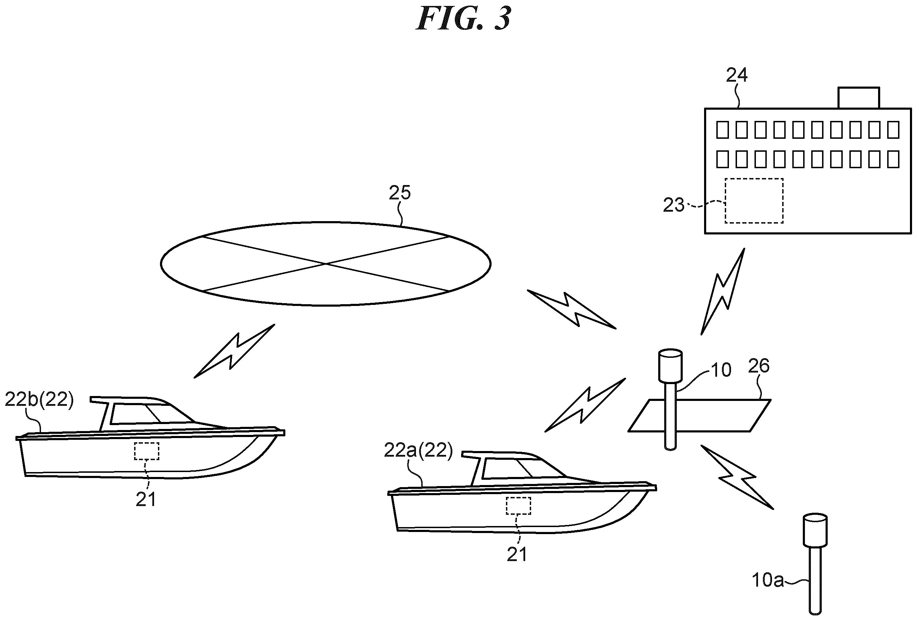

FIG. 3 is a view indicating communication using the marine vessel smart pole 10. FIG. 3 shows a case where the marine vessel smart pole 10 is provided to correspond to the pier 26 in the port.

The marine vessel smart pole 10 communicates with a neighboring marine vessel 22a equipped with a DCM 21 by short-range wireless communication using the wireless device 14 of the functional portion 12, and also communicates with another marine vessel smart pole 10a and a port facility 24 including a server 23 by short-range wireless communication. In addition, the marine vessel smart pole 10 communicates with a distant marine vessel 22b using a mobile phone line via the information communication network 25. In this case, for example, position information and an identification signal of the marine vessel 22a are transmitted from the neighboring marine vessel 22a to the marine vessel smart pole 10, and position information and a guidance command of the marine vessel smart pole 10 are transmitted from the marine vessel smart pole 10 to the neighboring marine vessel 22a. In addition, position information, neighborhood information, and route information of the marine vessel smart pole 10 are transmitted from the marine vessel smart pole 10 to the distant marine vessel 22b via the information communication network 25. Position information and an identification signal of the marine vessel 22b are transmitted from the distant marine vessel 22b to the marine vessel smart pole 10 via the information communication network 25.

Further, the other marine vessel smart pole 10a transmits neighborhood information and position information of the other marine vessel smart pole 10a to the marine vessel smart pole 10. The port facility 24 transmits a guidance command to the marine vessel smart pole 10. The neighborhood information and the position information of the marine vessel smart pole 10 are transmitted from the marine vessel smart pole 10 to the other marine vessel smart pole 10a. The marine vessel smart pole 10 transmits the identification number and the position information of the marine vessel smart pole 10, the neighborhood information, and the position information and the identification signals of the marine vessels 22a and 22b to the port facility 24.

In addition, the marine vessel smart pole 10 functions as a relay point. For example, when the neighboring marine vessel 22a communicates with the marine vessel smart pole 10 and the marine vessel smart pole 10 further communicates with the other marine vessel smart pole 10a or the port facility 24, the neighboring marine vessel 22a can communicate with the other marine vessel smart pole 10a or the port facility 24 using the marine vessel smart pole 10 as the relay point. Further, when the port facility 24 provides a short-range wireless communication service such as Wi-Fi (registered trademark), an occupant of the neighboring marine vessel 22a can cause the marine vessel smart pole 10 to function as a child device and communicate with the information communication network 25 using the short-range wireless communication service. In this case, a communication cost can be reduced as compared with a case where the DCM 21 of the neighboring marine vessel 22a communicates with the information communication network 25 using a mobile line.

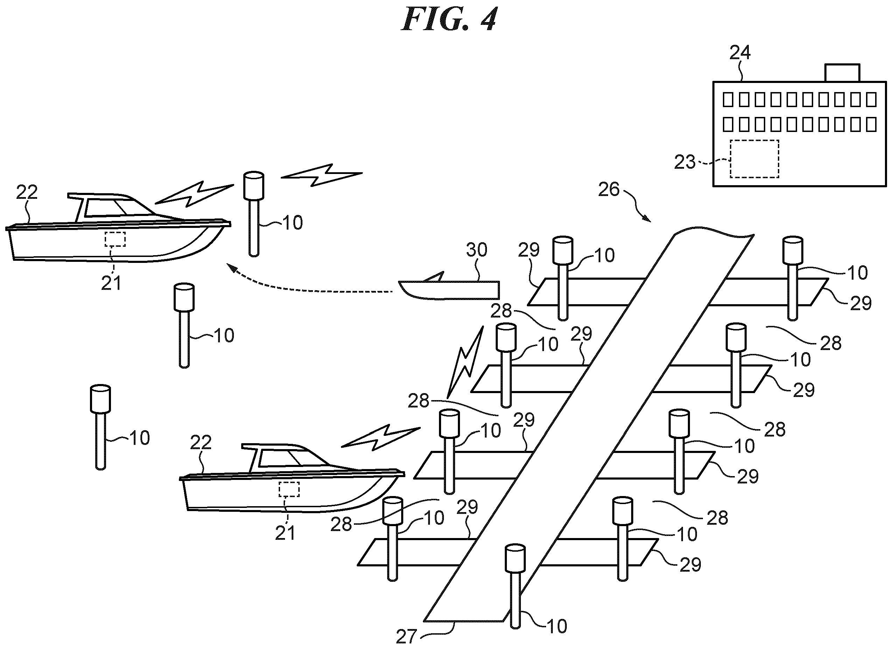

FIG. 4 is a view indicating a case where a plurality of the marine vessel smart poles 10 are arranged in a port. In FIG. 4, the pier 26 is arranged in the port, and the pier 26 has a walkway 27 and a plurality of fingers 29 constituting each of berths 28. In the pier 26, the marine vessel smart pole 10 is arranged to correspond to each of the fingers 29. In addition, in the port, a plurality of the marine vessel smart poles 10 are arranged at a place away from the pier 26.

Here, as described above, the identification number, the position information, and the neighborhood information of the marine vessel smart pole 10 are transmitted from each of the marine vessel smart poles 10 to the port facility 24. As a result, the server 23 of the port facility 24 can grasp at which finger 29 the marine vessel 22 is docked or moored, and can grasp a location of each of the marine vessels 22. Therefore, the server 23 can efficiently operate each of the berths 28 of the pier 26.

Further, since the server 23 can grasp the location of each of the marine vessels 22, when the port facility 24 provides a rental service or a management service of the marine vessels 22, the server 23 can grasp a departure situation and a return situation of each of the marine vessels 22 without any declaration from the occupant of each of the marine vessels 22. As a result, the rental service and the management service can be efficiently performed.

Further, as described above, the marine vessel 22 docked to each of the fingers 29 can communicate with the port facility 24 via the corresponding marine vessel smart pole 10. As a result, it is possible to reduce the labor of the occupant of the marine vessel 22 by, for example, enabling the occupant of the marine vessel 22 to submit a departure declaration and a return declaration to the port facility 24 using communication.

In addition, since the server 23 also receives the identification number and the position information, and the neighborhood information of the marine vessel smart pole 10 from the marine vessel smart pole 10 away from the pier 26, it is possible to grasp at which marine vessel smart pole 10 the marine vessel 22 is moored. In this case, the quality of the rental service can be improved by, for example, enabling a transportation boat 30 can be dispatched to the marine vessel smart pole 10 as a part of the rental service or the management service of the marine vessel 22. It should be noted that the transportation boat 30 is guided based on the position information of each of the marine vessel smart poles 10 transmitted from the marine vessel smart poles 10.

As described above, if automated transportation by the transportation boat 30 based on the communication with the marine vessel smart pole 10 is performed, only the marine vessel smart pole 10 may be installed in the port to manage the marine vessel 22 for rental to perform the rental service or the management service of the marine vessel 22, and it is not necessary to install the pier 26. Therefore, it is possible to provide the rental service or the management service of the marine vessel 22 at a low cost.

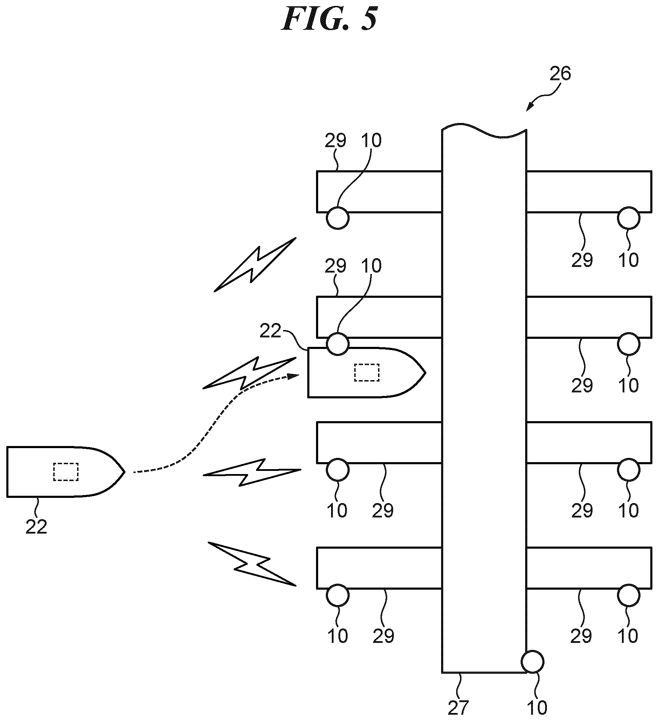

FIG. 5 is a plan view indicating automated docking of the marine vessel 22 using each of the marine vessel smart poles 10. In FIG. 5, the marine vessel 22 that has received a guidance command from the marine vessel smart pole 10 corresponding to the finger 29 to be docked also receives position information of each of the marine vessel smart poles 10. As described above, the position information of the marine vessel smart pole 10 has higher accuracy than the position information acquired by the GPS. Then, the marine vessel 22 grasps a relative positional relationship between each of the marine vessel smart poles 10 and the marine vessel 22 by referring to the position information of each of the marine vessel smart poles 10 and strength of a radio wave received from each of the marine vessel smart poles 10. Therefore, the marine vessel 22 can acquire a precise current position of the marine vessel 22 from the received position information of each of the marine vessel smart poles 10 and the relative positional relationship between each of the marine vessel smart poles 10 and the marine vessel 22. Then, the marine vessel 22 moves toward the finger 29 to be docked with reference to the precise current position of the marine vessel 22 and the position information of the marine vessel smart pole 10 corresponding to the finger 29 to be docked. As a result, the marine vessel 22 can execute highly accurate automated docking.

In addition, in this automated docking, it is not necessary to perform image recognition of the finger 29 of the pier 26 by a camera or the like, and thus, it is not necessary to provide an automated docking system based on conventional image processing which is expensive, and it is possible to reduce the cost of the marine vessel 22.

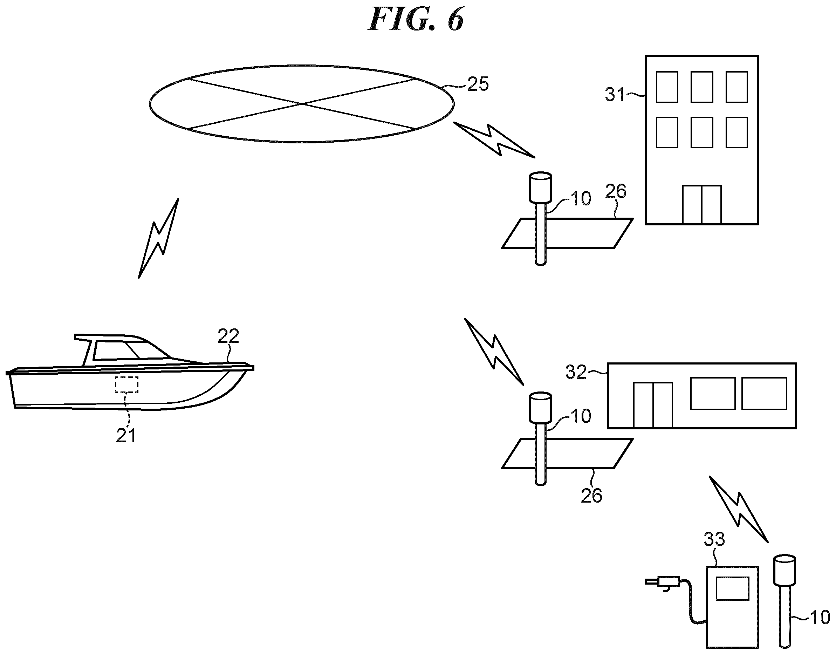

FIG. 6 is a view indicating use of service providing facilities using the marine vessel smart poles 10. In FIG. 6, an accommodation facility 31, a dining facility 32, and a refueling facility 33 are present as service providing facilities, and the accommodation facility 31 and the dining facility 32 are provided with the corresponding piers 26, respectively. In addition, the marine vessel smart poles 10 associated with the respective service providing facilities are arranged in the accommodation facility 31, the dining facility 32, and the refueling facility 33, respectively.

Each of the marine vessel smart poles 10 transmits at least one of a congestion situation and a reservation situation of the associated service providing facility to the information communication network 25 as neighborhood information. It should be noted that the transmitted neighborhood information may include a congestion situation and a reservation situation of the pier 26 corresponding to each of the service providing facilities. The transmitted neighborhood information may further include an identification number of the marine vessel smart pole 10 associated with each of the service providing facilities and position information of each of the service providing facilities.

The marine vessel 22 communicates with the information communication network 25 by the DCM 21 to receive the congestion situations and the reservation situations of these service providing facilities as the neighborhood information. As a result, an occupant of the marine vessel 22 can know the congestion situations and the reservation situations of the respective service providing facilities.

In addition, the occupant knowing the congestion situations and the reservation situations of the service providing facilities transmits a reservation request of a desired service providing facility to the marine vessel smart pole 10 associated with the service providing facility via the information communication network 25. Here, when the identification number of the marine vessel smart pole 10 is included in the reservation request, the reservation request can be reliably delivered to the marine vessel smart pole 10 associated with the desired service providing facility as the identification number included in the reservation request is referred to. Then, the marine vessel smart pole 10 that has received the reservation request transfers the reservation request to the associated service providing facility. As a result, the occupant of the marine vessel 22 can reserve the desired service providing facility even if the occupant is away from the desired service providing facility. In addition, each of the service providing facilities can obtain an opportunity to attract the occupant of the marine vessel 22 only by installing the corresponding marine vessel smart pole 10.

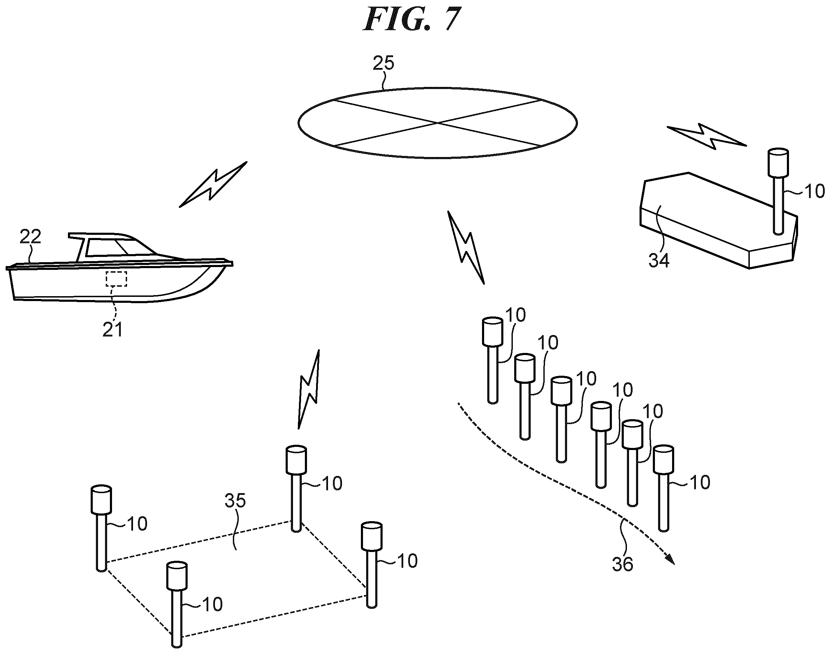

FIG. 7 is a view indicating a case where the marine vessel smart pole 10 is arranged in a predetermined area outside a port or the like. In FIG. 7, an artificial floating body 34 is arranged outside the port, and a (predetermined) entry prohibited area 35 and a (predetermined) route 36 are set as predetermined areas. The artificial floating body 34 is provided with the marine vessel smart pole 10. Around the entry prohibited area 35, a plurality of the marine vessel smart poles 10 are arranged so as to define (for example, surround) the entry prohibited area 35. In addition, a plurality of the marine vessel smart poles 10 are arranged along the route 36.

The marine vessel smart pole 10 of the artificial floating body 34 transmits information regarding an event carried out on the artificial floating body 34 and a congestion situation of the water surface near the artificial floating body 34 to the information communication network 25 as neighborhood information. It should be noted that the transmitted neighborhood information may include an identification number of the marine vessel smart pole 10 of the artificial floating body 34 and position information of the artificial floating body 34.

Then, the marine vessel 22 communicates with the information communication network 25 by the DCM 21, thereby receiving the neighborhood information transmitted by the marine vessel smart pole 10 of the artificial floating body 34. As a result, an occupant of the marine vessel 22 can know the content of the event carried out on the artificial floating body 34 and whether or not the occupant can approach the artificial floating body 34. In addition, an organizer who carries out the event can obtain an opportunity to attract the occupant of the marine vessel 22 only by installing the marine vessel smart pole 10 in the artificial floating body 34.

Each of the marine vessel smart poles 10 surrounding the entry prohibited area 35 transmits the presence of the entry prohibited area 35, position information of each of the marine vessel smart poles 10, and a relative positional relationship between each of the marine vessel smart poles 10 and the entry prohibited area 35 to the information communication network 25 as route information. In addition, each of the marine vessel smart poles 10 along the route 36 transmits information regarding the presence of the route 36, position information of each of the marine vessel smart poles 10, a relative positional relationship between each of the marine vessel smart poles 10 and the route 36, and regulations (navigation classification, speed, or the like) of the route 36 to the information communication network 25 as route information.

Then, the marine vessel 22 communicates with the information communication network 25 by the DCM 21 to receive the route information transmitted from each of the marine vessel smart poles 10 surrounding the entry prohibited area 35 and each of the marine vessel smart poles 10 along the route 36. As a result, the marine vessel 22 can know the presence and positions of the entry prohibited area 35 and the route 36, and can easily avoid the entry prohibited area 35 and follow the route 36.

At this time, it can be said that each of the marine vessel smart poles 10 surrounding the entry prohibited area 35 and each of the marine vessel smart poles 10 along the route 36 exhibit a route information providing function. When the plurality of marine vessel smart poles 10 cooperate to function in this manner, it can be said that the plurality of marine vessel smart poles 10 constitute a marine vessel smart system (marine vessel communication connection system).

According to the present embodiment, the marine vessel smart pole 10 provides the marine vessel 22 with the position of the marine vessel smart pole 10. Therefore, the precise current position of the marine vessel 22 can be acquired without using the GPS from the provided position of the marine vessel smart pole 10 and the relative positional relationship between the marine vessel smart pole 10 and the marine vessel 22. As a result, the occupant of the marine vessel 22 can enjoy a service that is premised on the presence of the precise position information of the marine vessel 22 such as the highly accurate automated docking.

In addition, in the present embodiment, since the marine vessel 22 receives the position information and the neighborhood information of the marine vessel smart pole 10, the occupant of the marine vessel 22 can know the congestion situation and the reservation situation of the service providing facility, the content of the event carried out on the artificial floating body 34, and the like. That is, since the number of options of services that can be received by the occupant of the marine vessel 22 during stay on water increases, it is possible to reduce an opportunity for the occupant of the marine vessel 22 to feel inconvenient to stay on water, and it is possible to enhance the comfort of leisure using the marine vessel 22.

Although the preferred embodiment of the present invention has been described above, the present invention is not limited to the above-described embodiment, and various modifications and changes can be made within the scope of the gist of the present invention.

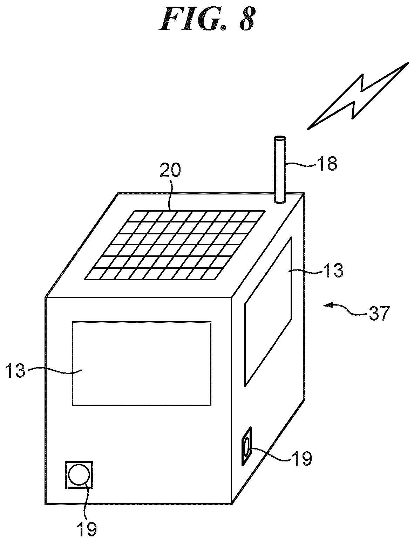

For example, the marine vessel smart pole 10 has the communication function, the position information providing function, the neighborhood information providing function, and the route information providing function (hereinafter, collectively referred to as a "smart service providing function") in the above-described embodiment, but any form may be adopted in terms of implementing the present invention as long as the marine vessel smart pole 10 can provide the smart service providing function. For example, instead of the marine vessel smart pole 10, a connected device 37 (marine vessel communication connection device), which is a simple device as shown in FIG. 8, may be used in the implementation of the present invention. At this time, the connected device 37 has the same configuration as the functional portion 12 of the marine vessel smart pole 10 and has the above-described smart service providing function.

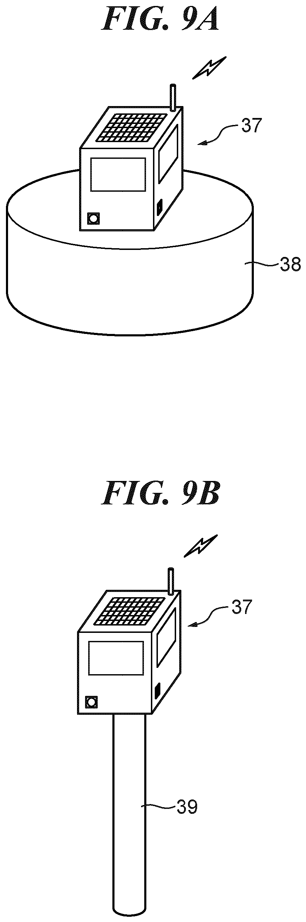

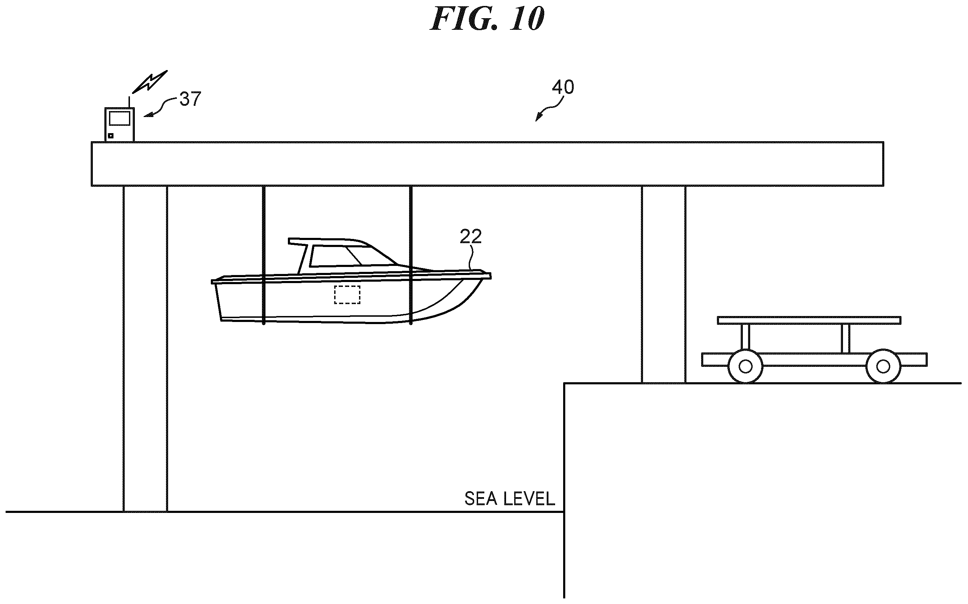

In addition, the connected device 37 is configured to be attachable to other instruments, equipment, and existing structures. For example, the connected device 37 may be attached to a buoy 38 that is an artificial floating body as shown in FIG. 9A, or may be simply attached to a pole 39 as shown in FIG. 9B. The connected device 37 may further be attached to a light beacon on water, an indicator, a signal light, or a lighthouse installed on land near the waterfront. In particular, as shown in FIG. 10, the connected device 37 may be provided in a large structure that is relatively easily found from the marine vessel 22 on water, such as a marine vessel lifting device 40 of a port facility. In this case, since the large structure functions as a landmark, an occupant of the marine vessel 22 can easily understand which way to navigate to sail to use the smart service providing function, and the use of the smart service providing function by the occupant of the marine vessel 22 can be promoted.

It should be noted that, since the smart service providing function can be provided only by attaching the connected device 37 to existing instruments, equipment, and structures, the connected device 37 can lower a hurdle when the occupant of the marine vessel 22 introduces and uses the smart service providing function as compared with the marine vessel smart pole 10 that needs to be newly installed.

The following claims are attached in order to make the scope of the present invention publicly known.

The present application claims priority based on Japanese Patent Application No. 2022-128241 filed on August 10, 2022, the entire contents of which are incorporated herein by reference. Reference Signs List

- 10: Marine vessel smart pole
- 14: Wireless device
- 15: Information collection device
- 17: Power storage device
- 19: Monitoring camera
- 20: Solar cell panel
- 22: Marine vessel
- 23: Server
- 24: Port facility
- 25: Information communication network
- 26: Pier
- 31: Accommodation facility
- 32: Dining facility
- 33: Refueling facility
- 34: Artificial floating body
- 35: Entry prohibited area
- 36: Route
- 37: Connected device
- 38: Buoy
- 39: Pole
- 40: Marine vessel landing device

## Claims

1. A marine vessel smart pole comprising:
a communication function of communicating with a marine vessel and an object other than the marine vessel; and
a position information providing function of providing a position of the marine vessel smart pole to at least one of the marine vessel and the object other than the marine vessel.

2. The marine vessel smart pole according to claim 1, wherein the object other than the marine vessel is at least one of an information communication network, an information processing device, and another marine vessel smart pole.

3. The marine vessel smart pole according to claim 1, wherein the position information providing function provides the position of the marine vessel smart pole stored in the marine vessel smart pole to at least one of the marine vessel and the object other than the marine vessel.

4. The marine vessel smart pole according to claim 1, further comprising a neighborhood information providing function of grasping a neighborhood situation of the marine vessel smart pole and providing information regarding the grasped neighborhood situation to at least one of the marine vessel and the object other than the marine vessel.

5. The marine vessel smart pole according to claim 4, wherein the neighborhood information providing function provides information regarding a marine vessel existing near the marine vessel smart pole.

6. The marine vessel smart pole according to claim 5, wherein information regarding the marine vessel is information regarding whether or not the marine vessel is moored on the marine vessel smart pole or information regarding whether or not the marine vessel is anchored near the marine vessel smart pole.

7. The marine vessel smart pole according to claim 4, wherein the neighborhood information providing function provides at least one of a congestion situation and a reservation situation of a service providing facility associated with the marine vessel smart pole.

8. The marine vessel smart pole according to claim 7, wherein the service providing facility is any one of an accommodation facility, a dining facility, a pier, and a refueling facility.

9. The marine vessel smart pole according to claim 1, further comprising a route information providing function of providing information regarding a route to a navigating marine vessel.

10. The marine vessel smart pole according to claim 9, wherein the information regarding the route is at least one of information regarding a route regulation and information regarding an entry prohibited area.

11. The marine vessel smart pole according to claim 1, further comprising a power storage function of generating electricity and storing the generated electricity.

12. The marine vessel smart pole according to claim 1, further comprising an indicator function of providing a landmark to a navigating marine vessel.

13. A marine vessel communication connection device installed on water or on land near waterfront, the marine vessel communication connection device comprising:
a communication function of communicating with a marine vessel and an object other than the marine vessel; and
a position information providing function of providing a position of the marine vessel communication connection device to at least one of the marine vessel and the object other than the marine vessel.

14. The marine vessel communication connection device according to claim 13, wherein the marine vessel communication connection device is provided on a pole, a light beacon, an indicator, or an artificial floating body.

15. The marine vessel communication connection device according to claim 13, being provided in a marine vessel landing device of a port facility.

16. A marine vessel communication connection system comprising a plurality of marine vessel smart poles arranged in a predetermined area on water,
wherein each of the plurality of marine vessel smart poles has a communication function of communicating with a marine vessel and an object other than the marine vessel, and a position information providing function of providing a position of the marine vessel smart pole to at least one of the marine vessel and the object other than the marine vessel.

17. The marine vessel communication connection system according to claim 16, wherein the plurality of marine vessel smart poles are arranged along a predetermined route.

18. The marine vessel communication connection system according to claim 16, wherein the plurality of marine vessel smart poles are arranged to surround an entry prohibited area.

19. The marine vessel communication connection system according to claim 16, wherein the plurality of marine vessel smart poles are arranged in a port.
